# EUROPEAN PATENT APPLICATION

(11) **EP 2 946 976 A2**
(43) Date of publication of application: **25.11.2015**
(21) Application number: 15167417.3
(22) Date of filing: 12.05.2015
(51) Int. Cl.: B60R 16/033

(54) **POWER SUPPLY CONTROL DEVICE**

(30) Priority: 14.05.2014 JP 2014100161
(71) Applicant: Toyota Jidosha Kabushiki Kaisha, Toyota-shi, Aichi-ken 471-8571 (JP)
(72) Inventor: Matsunaga, Masaki, TOYOTA-SHI, AICHI-KEN, 471-8571 (JP); Eshima, Kazuhito, TOYOTA-SHI, AICHI-KEN, 471-8571 (JP); Suzuki, Takeaki, TOYOTA-SHI, AICHI-KEN, 471-8571 (JP)
(74) Representative: Intès, Didier Gérard André

(57) **Abstract**

A power supply control device comprises: a generator (10) driven by an engine; a lead acid battery (30) and a lithium ion battery (40) connected in parallel to the generator; an SOC detector that detects SOC of the lead acid battery; and a charge controller (70) that controls charging of the lead acid battery. The charge controller performs the charge control based on a regenerative predictive value estimated according to vehicle state information (step S130) when the SOC is greater than a threshold SL1. The charge controller performs the charge control irrespective of the regenerative predictive value (step S170) when the SOC is less than SL1. When the charge surplus of the lithium ion battery is larger than a charge deficiency of the lead acid battery (step S150: YES), the charge controller performs the charge control based on the regenerative predictive value, regardless of whether the SOC is less than SL1 (step S130).

## Description

### BACKGROUND

### Field

The present invention relates to a power supply control device mounted on a vehicle.

### Description of Related Art

A vehicle equipped with an engine as the power source has a battery (storage battery) provided to supply electric power to various electrical loads and an alternator (generator) driven by rotation of the engine to generate electric power. The battery is charged by the alternator. A known technique for charge control that controls charging of the battery prevents the battery from being charged during ordinary running to reduce fuel consumption, while charging the battery by regenerative power generation during deceleration of the vehicle (e.g., braking).

In order to protect the battery life, a proposed technique described in JP 2005-160269A prohibits the above-described charge control when the SOC (State Of Charge) of the battery decreases below a predetermined threshold value and instead controls the alternator to generate electric power regardless of regenerative control to increase the SOC of the battery.

However, the above proposed technique of controlling the alternator to generate electric power regardless of regenerative control when the SOC of the battery decreases below the predetermined threshold value results in losing the opportunity to improve fuel economy via the above charge control. This leads to a problem of insufficient improvement of fuel economy.

### SUMMARY

In order to address at least part of the problems described above, the invention may be implemented by the following aspects.

(1) According to one aspect of the invention, there is provided a power supply control device mounted on a vehicle, the vehicle being equipped with an engine. The power supply control device comprises: a generator driven by the engine; a first battery and a second battery connected in parallel to the generator; an SOC detector configured to detect SOC (state of charge) of the first battery; and
a charge controller configured to perform charge control that controls charging of at least the first battery by the generator, the charge controller performing the charge control based on a regenerative predictive value estimated according to vehicle state information when the SOC of the first battery is greater than a predetermined threshold value, while performing the charge control irrespective of the regenerative predictive value when the SOC of the first battery is less than the predetermined threshold value.

The charge controller obtains a value indicative of a charge surplus of the second battery and, when the charge surplus is larger than a charge deficiency of the first battery, performs the charge control based on the regenerative predictive value, regardless of whether the SOC of the first battery is less than the threshold value.

The second battery may include an OCV (open circuit voltage)-SOC characteristic providing a higher OCV for SOC values in a predetermined SOC range, compared with an OCV at the same SOC values in an OCV-SOC characteristic of the first battery.

The first battery may be a lead acid battery, and the second battery may be a lithium ion battery.

The first battery may be a lead acid battery, and the second battery may be a nickel hydride battery.

The invention may be implemented by any of various other aspects: for example, a battery system, a vehicle, a power supply control method and a backup system.

### BRIEF DESCRIPTION OF DRAWINGS

Fig. 1 is a diagram illustrating configuration of a power supply control device according to a first embodiment of the invention;
Fig. 2 is a graph showing OCV-SOC characteristics of a lead acid battery and a lithium ion battery; and
Fig. 3 is a flowchart showing a charge control routine.

### DESCRIPTION OF EMBODIMENTS

### A. General Configuration

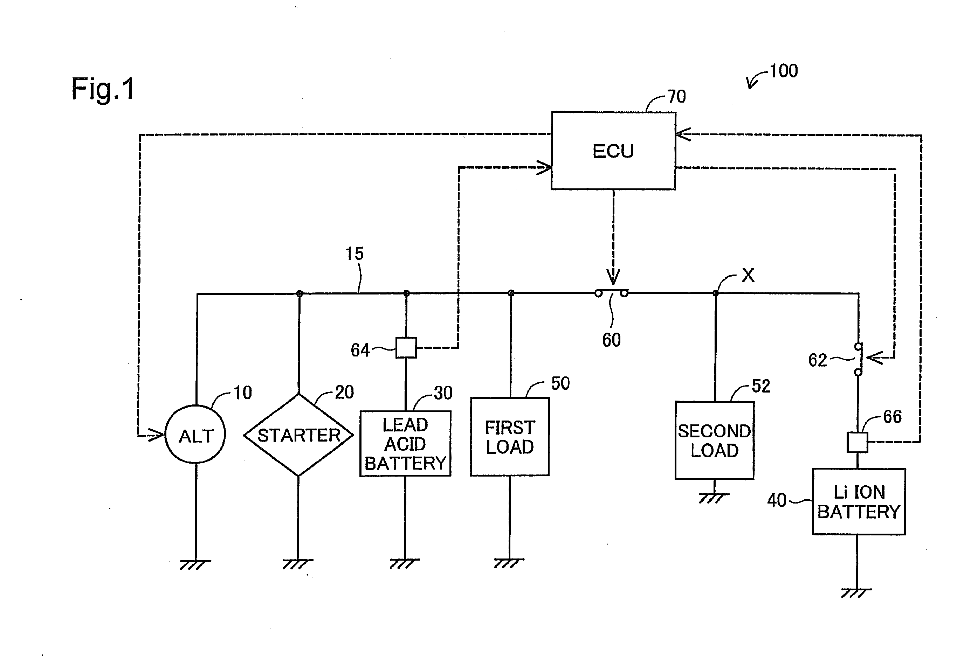

Fig. 1 is a diagram illustrating the configuration of a power supply control device 100 according to a first embodiment of the invention. The power supply control device 100 of the first embodiment is mounted on a vehicle. The vehicle is an automobile driven with an engine (internal combustion engine) as the power source. Upon starting the engine, initial rotation power is applied to the engine by operation of a starter. The vehicle has the function of idle reduction control to automatically stop the engine when a predetermined auto stop condition is satisfied and to automatically restart the engine from the automatically stopped state when a predetermined restart condition is satisfied.

As shown in Fig. 1, the power supply control device 100 includes an alternator (generator) 10, a starter 20, a lead acid battery 30 as a first battery, a lithium ion battery 40 as a second battery, a first electrical load (hereinafter simply called "load") 50, a second load 52, a main switch 60 and a sub-switch 62. The starter 20, the lead acid battery 30, the first load 50, the second load 52 and the lithium ion battery 40 are electrically connected in parallel to the alternator 10 by a power line 15 functioning as a connection line. The power line 15 forms a mutual power supply pathway among the above-mentioned electrical components.

The lead acid battery 30 is one of known general-purpose type storage batteries. The lithium ion battery 40 is a high-density storage battery having higher charge-discharge energy efficiency, higher output density and higher energy density than those of the lead acid battery 30. The lithium ion battery 40 is a 12 V battery pack consisting of a plurality of unit cells connected in series. The storage capacity of the lead acid battery 30 is set larger than the storage capacity of the lithium ion battery 40.

The main switch 60 is a semiconductor switch using a MOSFET and is located between the side where the alternator 10 and the lead acid battery 30 are placed and the side where the lithium ion battery 40 is placed. The main switch 60 serves as a switch to change over the state between electrical continuity (on state) and electrical shutdown (off state) of the lithium ion battery 40 relative to the alternator 10 and the lead acid battery 30.

An ECU (electronic control unit) 70 controls on/off of the main switch 60. In other words, the ECU 70 controls the switchover of the main switch 60 between the on position (state of electrical continuity) and the off position (state of electrical shutdown).

The sub-switch 62 is a semiconductor switch using a MOSFET like the main switch 60 and connects the lithium ion battery 40 and a connection point (shown as X in the illustration) of the main switch 60 and the second load 52. The sub-switch 62 serves to switch between electrical continuity and electrical shutdown of the lithium ion battery 40 relative to the connection point X of the main switch 60 and the second load 52.

The ECU 70 controls the switchover of the sub-switch 62 between the on position (state of electrical continuity) and the off position (state of electrical shutdown). The sub-switch 62 also serves as an emergency open-close mechanism and is kept at the on-position in the normal state in response to an on-signal output from the ECU 70. In the emergency state as described below, the output of the on-signal is stopped, and the sub-switch 62 is turned to the off position. Turning the sub-switch 62 to the off position protects the lithium ion battery 40 from overcharge and over-discharge.

For example, when a regulator provided in the alternator 10 fails and an abnormally high adjusting voltage (as the output voltage of the alternator 10) results, the lithium ion battery 40 may be overcharged. In this case, the sub-switch 62 is turned to the off position. When a failure of the alternator 10 or a failure of the main switch 60 prevents the lithium ion battery 40 from being charged, on the other hand, the lithium ion battery 40 may be over-discharged. In this case, the sub-switch 62 is also turned to the off position.

A normally open electromagnetic relay may be employed for the sub-switch 62. Even in the case that the ECU 70 fails to control the operation of the sub-switch 62, the electromagnetic relay of the sub-switch 62 is automatically turned to the off position, so as to interrupt the electrical continuity between the lithium ion battery 40 and the connection point (shown as X in the illustration) of the main switch 60 and the second load 52.

The second load 52 is a constant voltage-requiring load that requires a substantially constant voltage of supplied power or a relatively stable voltage fluctuation within a predetermined range, and is electrically connected with the lithium ion battery 40-side of the main switch 60. Such connection causes the lithium ion battery 40 to provide the main share of the power supply to the second load 52.

Concrete examples of the second load 52 include a navigation system and audio equipment. For example, when the voltage of the supplied power is not constant but is significantly changed, or when the voltage is drastically changed beyond the predetermined range, the voltage may be instantaneously decreased below a minimum operating voltage. This may cause problems such as a reset of the navigation system or the like. The electric power supplied to the second load 52 should thus have a stable voltage and be kept at a substantially constant level, so as to not decrease below the minimum operating voltage.

The first load 50 is a general electrical load other than the second load 52 (constant voltage-requiring electrical load). Concrete examples of the first load 52 include headlights, windshield wipers for example, for a front windshield, a blower fan for an air conditioner, and a defroster heater for a rear windshield. The first load 50 is electrically connected with the lead acid battery 30-side of the main switch 60. Such connection causes the lead acid battery 30 to provide the main share of power supplied to the first load 50.

The starter 20 is an electric motor for engine starting and corresponds to an electrical load. The starter 20 is electrically connected with the lead acid battery 30-side of the main switch 60. Such connection causes the lead acid battery 30 to be the primary power supply for the starter 20.

The alternator 10 generates electric power using rotational energy of a crankshaft (output shaft) of the engine. The structure of the alternator 10 is known in the art and is only briefly described herein with omission of precise illustration. When a rotor of the alternator 10 is rotated by the crankshaft, alternating current is induced in a stator coil in response to excitation current flowing in a rotor coil and is converted to DC (direct current) electricity by a rectifier. The voltage of the generated DC electricity is regulated to the adjusting voltage by adjusting the excitation current flowing in the rotor coil by a regulator. The ECU 70 controls the regulator of the alternator 10.

The electric power generated by the alternator 10 is supplied to the starter 20, the first load 50 and the second load 52, while being supplied to the lead acid battery 30 and the lithium ion battery 40. In the state that the engine stops and the alternator 10 does not generate electric power, electric power is supplied from the lead acid battery 30 and the lithium ion battery 40 to the starter 20, the first load 50 and the second load 52.

The lead acid battery 30 and the lithium ion battery 40 are respectively equipped with current sensors 64 and 66. The current values detected by the respective current sensors 64 and 66 are sent to the ECU 70. The ECU 70 separately integrates the respective current values and thereby determines the SOC (state of charge) of each of the batteries 30 and 40. The SOC denotes the ratio of the actual amount of charge to the full charge level. The SOC is not necessarily determined based on the battery current detected by the current sensor but may be determined based on the detection value of, for example, a battery electrolytic solution specific gravity sensor, a cell voltage sensor or a battery terminal voltage sensor. Furthermore, determination of the SOC is not limited to the configuration of detecting the electric charge remaining in the battery, but the state of charge (SOC) may be determined using another parameter, for example, a chargeable amount.

The ECU 70 is implemented by a microcomputer including, for example, a CPU, a ROM and a RAM, and performs control operations of the entire vehicle. The control operations include engine control, idle reduction control and charge control. The charge control serves to control the power generation by the alternator 10 and thereby regulate the amount of charge from the alternator 10 into the lead acid battery 30 and the lithium ion battery 40.

The charge control includes regenerative charge control and non-regenerative charge control. The regenerative charge control denotes control that suppresses the batteries from being charged by fuel power generation during ordinary running to save on fuel consumption, while causing the lead acid battery 30 and the lithium ion battery 40 to be charged by regenerative power generation during deceleration (e.g., braking). More specifically, the regenerative charge control sets a higher power generation voltage command value to be sent to the alternator 10 during deceleration so as to actively recover the regenerative energy of the vehicle, while setting a lower power generation voltage command value to be sent to the alternator 10 during ordinary running. The regenerative charge control estimates a regenerative predictive value expected to be generated by the alternator 10, based on vehicle state information, and determines the power generation voltage command value to be sent to the alternator 10, based on the regenerative predictive value. The vehicle state information is information which indicates the driving state of the vehicle. The vehicle state information may include, for example, running speed of the vehicle (vehicle speed), deceleration of the vehicle and the depression amount of a brake pedal.

The non-regenerative charge control denotes control that increases the power generation voltage command value to be sent to the alternator 10, irrespective of regenerative control. The ECU 70 performs the charge control with adequate switchover between the regenerative charge control and the non-regenerative charge control, thereby enabling the lead acid battery 30 and the lithium ion battery 40 to be efficiently charged.

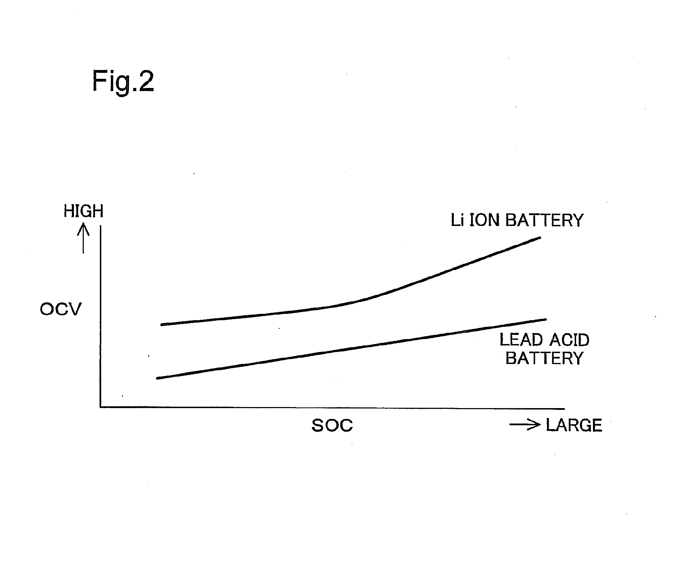

Fig. 2 is a graph showing OCV-SOC characteristics of the lead acid battery 30 and the lithium ion battery 40. The OCV-SOC characteristics in Fig. 2 indicate OCVs (open circuit voltages) in a predetermined continuously monitorable SOC range for the lead acid battery 30 and the lithium ion battery 40. As shown in this graph, the lithium ion battery 40 has the OCV-SOC characteristic giving the higher OCV in the predetermined SOC range, compared with the OCV-SOC characteristic of the lead acid battery 30. This means that discharging of the lithium ion battery 40 is given priority over discharging of the lead acid battery 30.

### B. Flow of Charge Control Routine

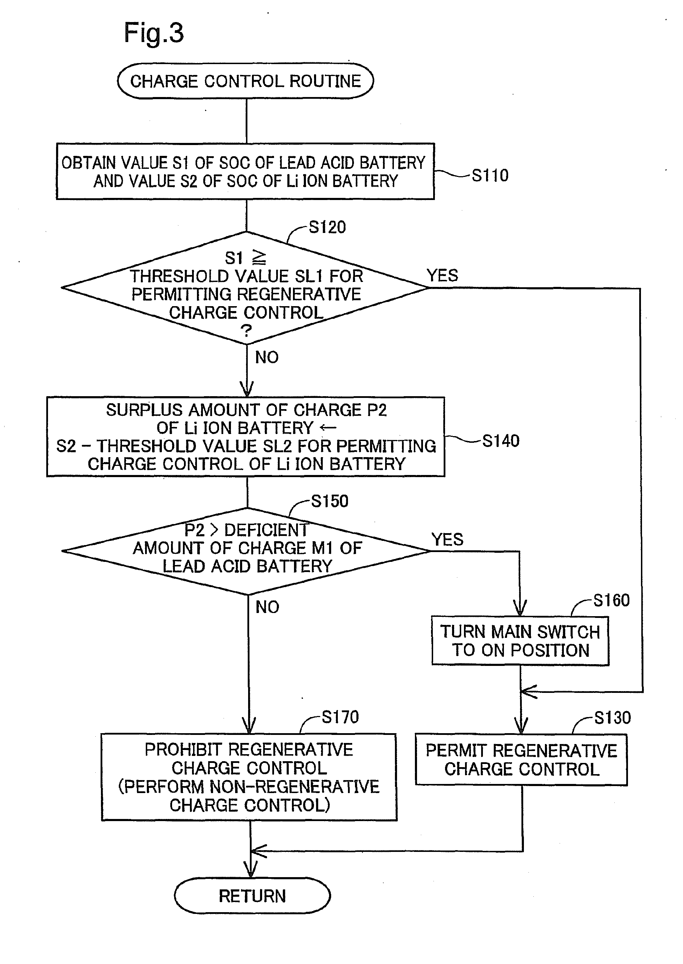

Fig. 3 is a flowchart showing the details of a charge control routine performed by the ECU 70. This charge control routine is triggered by ignition start of the engine of the vehicle and is repeated at predetermined time intervals. At the time of triggering the charge control routine, the sub-switch 62 (Fig. 2) is set in the on position. At the start of the control flow, the ECU 70 first obtains a value S1 indicative of a SOC of the lead acid battery 30 and a value S2 of SOC of the lithium ion battery 40 calculated from the integrated values of the current sensors 64 and 66 (step S110).

The lead acid battery 30 and the lithium ion battery 40 respectively have threshold values SL1 and SL2 set in advance for permitting the regenerative charge control. After the processing of step S110, the ECU 70 determines whether the value S1 of the lead acid battery 30 is equal to or greater than the threshold value SL1 for permitting the regenerative charge control of the lead acid battery 30 (step S120). When it is determined at step S120 that the value S1 is equal to or greater than the threshold value SL1 (step S120: Yes), the ECU 70 permits the regenerative charge control described above (step S130). More specifically, the regenerative charge control sets a higher power generation voltage command value to be sent to the alternator 10 during deceleration so as to recover the regenerative energy of the vehicle into the lead acid battery 30 and the lithium ion battery 40, while setting a lower power generation voltage command value to be sent to the alternator 10 during ordinary running. Immediately after the affirmative answer at step S120, the main switch 60 may be set in the on position or may be set in the off position. In the off position, the lithium ion battery 40 is not charged. After the processing of step S130, the charge control routine goes to "Return" and is terminated.

When it is determined at step S120 that the value S1 is less than the threshold value SL1 (step S120: No), on the other hand, the ECU 70 subtracts the threshold value SL2 for permitting the regenerative charge control of the lithium ion battery 40 from the value S2 of SOC of the lithium ion battery 40 obtained at step S110, and convert the difference to calculate a charge surplus P2 of the lithium ion battery 40 (step S140).

After the processing of step S140, the ECU 70 subtracts the threshold value SL1 for permitting the regenerative charge control of the lead acid battery 30 from the value S1 of SOC of the lead acid battery 30, and convert the difference to calculate a charge deficiency M1 of the lead acid battery 30 and determines whether the charge surplus P2 of the lithium ion battery 40 is larger than the charge deficiency M1 of the lead acid battery 30 (step S150). When it is determined at step S150 that the charge surplus P2 is larger than the charge deficiency M1, the control flow proceeds to step S160 at which the ECU 70 turns the main switch 60 to the on position (or keeps the main switch 60 at the on position when the main switch 60 is already set in the on position). The control flow subsequently proceeds to step S130.

As described above, the power supply control device 100 gives priority to discharging of the lithium ion battery 40 over discharging of the lead acid battery 30. When the main switch 60 is in the on position, the charge surplus P2 of the lithium ion battery 40 is accordingly transferred promptly to the lead acid battery 30, so as to compensate for the charge deficiency M1 of the lead acid battery 30. After the processing of step S160, the control flow thus proceeds to step S130 to permit the regenerative charge control.

When it is determined at step S150 that the charge surplus P2 is equal to or smaller than the charge deficiency M1, on the other hand, the ECU 70 prohibits the regenerative charge control and performs the non-regenerative charge control (step S170). More specifically, the ECU 70 increases the power generation voltage command value to be sent to the alternator 10 irrespective of regenerative control and charges at least the lead acid battery 30. The value S1 of SOC of the lead acid battery 30 is significantly small to be equal to or less than the threshold value SL1 for permitting the regenerative charge control. This causes the lead acid battery 30 out of the two batteries 30 and 40 to be securely charged. After the processing of step S170, the charge control routine goes to "Return" and is terminated.

Although not being specifically shown in the flowchart, in the charge control routine, the ECU 70 additionally determines whether the value S2 of SOC of the lithium ion battery 40 is greater than the threshold value SL2 for permitting the generative charge control of the lithium ion battery 40 and permits the regenerative charge control when the value S2 is greater than the threshold value SL2, while prohibiting the regenerative charge control and performing the non-regenerative charge control when the value S2 is not greater than the threshold value SL2.

### C. Advantageous Effects of Embodiment

As described above, when the charge surplus P2 of the lithium ion battery 40 is larger than the charge deficiency M1 of the lead acid battery 30 (step S150: Yes), the power supply control device 100 of the embodiment permits the regenerative charge control (step S130), regardless of whether the SOC of the lead acid battery 30 is less than the threshold value SL1 for permitting the regenerative charge control (step S120: No). As described above, the charge surplus M1 of the lead acid battery 30 is expected to be recovered promptly to be equal to or larger than the permitting threshold value SL1 by using the charge surplus P2 of the lithium ion battery 40. This configuration improves the chances of improving fuel economy using the charge control based on the regenerative predictive value. The power supply control device 100 of the embodiment accordingly has the advantageous effect of sufficiently improving the fuel economy.

### D. Modifications

### * Modification 1

The above embodiment employs a lithium ion battery for the second battery, but may employ another battery for the second battery, for example, a nickel hydride battery. Like the lithium ion battery, as shown in Fig. 2, the nickel hydride battery has the OCV-SOC characteristic consistently giving the higher OCV in the predetermined SOC range, compared with the OCV-SOC characteristic of the lead acid battery. Employing a battery having such OCV-SOC characteristic giving the higher OCV for the second battery ensures the advantageous effect similar to that of the embodiment described above.

### * Modification 2

The above embodiment describes the vehicle equipped with only an engine as the power source. The invention may also be applied to a hybrid vehicle equipped with both an engine and a motor as the power source.

### * Modification 3

Part of the functions implemented by the software configuration in the above embodiment may be achieved by hardware configuration (for example, integrated circuit), and part of the functions implemented by the hardware configuration in the above embodiment may be achieved by software configuration.

### * Modification 4

In the above embodiment, when the value S1 is equal to or greater than the threshold value SL1 (step S120: Yes), the ECU 70 permits the regenerative charge control in step S130, and when the value S1 is less than the threshold value SL1 (step S120: No), the ECU 70 performs the procedures of step S140 and subsequent steps. However, the ECU 70 may permit the regenerative charge control, when the value S1 is greater than the threshold value SL1, and the ECU 70 may perform the procedures of step S140 and subsequent steps, when the value S1 is equal to or less than the threshold value SL1.

The present invention is not limited to the embodiment or any of the examples or modifications described above, but may be implemented by a variety of other configurations without departing from the scope of the invention. For example, the technical features of the embodiment or any of the examples ad the modifications corresponding to the technical features of each of the aspects described in the Summary may be replaced or combined appropriately, unless otherwise contradictory, in order to solve part or all of the problems described above or in order to achieve part or all of the advantageous effects described above. Among the components of the embodiment or each of the modifications described above, any of the components other than those described in the following independent claims are additional components and may be omitted appropriately.

The following aspects may be applied to the present invention.
(1) According to one aspect of the invention, there is provided a power supply control device mounted on a vehicle. The power supply control device mounted on a vehicle is equipped with an engine. The power supply control device comprises: a generator driven by the engine; a first battery and a second battery connected in parallel to the generator; an SOC detector configured to detect SOC (state of charge) of the first battery; and
   a charge controller configured to perform charge control that controls charging of at least the first battery by the generator, the charge controller performing the charge control based on a regenerative predictive value estimated according to vehicle state information when the SOC of the first battery is greater than a predetermined threshold value, while performing the charge control irrespective of the regenerative predictive value when the SOC of the first battery is less than the predetermined threshold value.

The charge controller obtains a value indicative of a charge surplus of the second battery and, when the charge surplus is larger than a charge deficiency of the first battery, performs the charge control based on the regenerative predictive value, regardless of whether the SOC of the first battery is less than the threshold value.

In the power supply control device having the second battery connected in parallel to the first battery, in the state that the charge surplus of the second battery is larger than the charge deficiency of the first battery, recovery of the SOC of the first battery to or above the predetermined threshold value for starting the charge control is expected even when the SOC of the first battery is less than the predetermined threshold value. There is accordingly no need to prohibit the charge control based on the regenerative predictive value. The charge controller accordingly measures the charge surplus of the second battery, and performs the charge control based on the regenerative predictive value, regardless of the SOC of the first battery less than the threshold value, when the charge surplus is larger than the charge deficiency of the first battery. This increases the possibility of improvement in fuel economy by the charge control based on the regenerative predictive value. The power supply control device of this aspect accordingly has the advantageous effect of improving fuel economy.

The charge controller preferably performs the charge control based on the regenerative predictive value estimated according to vehicle state information when the SOC of the first battery is greater than the predetermined threshold value. The charge controller preferably performs the following controls, when the SOC of the first battery is less than the predetermined threshold value: the charge controller performs the charge control based on the regenerative predictive value estimated according to vehicle state information, when the charge surplus is larger than the charge deficiency of the first battery; and the charge controller performs the charge control irrespective of the regenerative predictive value, when the charge surplus is less than the charge deficiency of the first battery.
(2) According to another aspect of the invention, the second battery preferably has an OCV (open circuit voltage)-SOC characteristic providing a higher OCV in a predetermined SOC range, compared with an OCV-SOC characteristic of the first battery. The power supply control device of this aspect gives priority to discharging of the second battery over discharging of the first battery.

The second battery preferably has an OCV (open circuit voltage)-SOC characteristic providing a higher OCV in a predetermined SOC range, compared with an OCV at the same SOC value in an OCV-SOC characteristic of the first battery.

(3) According to yet another aspect of the invention, it is preferable that the first battery is a lead acid battery, and the second battery is a lithium ion battery. The power supply control device of this aspect achieves the OCV-SOC characteristic of the second battery providing the higher OCV compared with the OCV at the same SOC value in the OCV-SOC characteristic of the first battery as described above. Accordingly, the power supply control device of this aspect gives priority to discharging of the lithium ion battery over discharging of the lead acid battery.

(4) According to further aspect of the invention, it is preferable that the first battery is a lead acid battery, and the second battery is a nickel hydride battery. The power supply control device of this aspect achieves the OCV-SOC characteristic of the second battery providing the higher OCV compared with the OCV at the same SOC value in the OCV-SOC characteristic of the first battery as described above. Accordingly, the power supply control device of this aspect gives priority to discharging of the nickel hydride battery over discharging of the lead acid battery.

## Claims

1. A power supply control device (100) mounted on a vehicle equipped with an engine, comprising:
a generator (10) driven by the engine;
a first battery (30) and a second battery (40) connected in parallel to the generator (10);
an SOC detector configured to detect SOC (state of charge) of the first battery (30); and
a charge controller (70) configured to perform charge control that controls charging of at least the first battery (30) by the generator (10), the charge controller (70) performing the charge control based on a regenerative predictive value estimated according to vehicle state information when the SOC of the first battery (30) is greater than a predetermined threshold value, while performing the charge control irrespective of the regenerative predictive value when the SOC of the first battery (30) is less than the predetermined threshold value, wherein
the charge controller (70) obtains a value indicative of a charge surplus of the second battery (40) and, when the charge surplus is larger than a charge deficiency of the first battery (30), performs the charge control based on the regenerative predictive value, regardless of whether the SOC of the first battery (30) is less than the threshold value.

2. The power supply control device (100) according to claim 1, wherein the second battery (40) has an OCV (open circuit voltage)-SOC characteristic providing a higher OCV for SOC values in a predetermined SOC range, compared with an OCV at the same SOC values in an OCV-SOC characteristic of the first battery (30).

3. The power supply control device (100) according to any of the previous claims, wherein
the first battery (30) is a lead acid battery, and
the second battery (40) is a lithium ion battery.

4. The power supply control device according to any of claims 1 and 2,
wherein
the first battery (30) is a lead acid battery, and
the second battery (40) is a nickel hydride battery.
